# EUROPÄISCHE PATENTSCHRIFT

(11) **EP 1 861 685 B1**
(45) Veröffentlichungstag und Bekanntmachung des Hinweises auf die Patenterteilung: **17.09.2008**
(21) Anmeldenummer: 06704255.6
(22) Anmeldetag: 16.01.2006
(51) Int. Cl.: G01K 1/12, G01K 13/02, F01D 17/08

(54) **GASTURBINE MIT SCHUTZHÜLLE FÜR EINEN MESSFÜHLER UND VERFAHREN ZUM SCHÜTZEN EINER IN EINER SCHUTZHÜLLE VERLEGTEN MESSLEITUNG**
GAS TURBINE WITH PROTECTIVE SLEEVE FOR A MEASURING PROBE AND METHOD FOR PROTECTION OF A MEASURING LINE ARRANGED IN A PROTECTIVE SLEEVE
TURBINE A GAZ COMPRENANT UNE GAINE DE PROTECTION POUR UN CAPTEUR ET PROCEDE POUR PROTEGER UNE CONDUITE DE MESURE INSTALLEE DANS UNE GAINE DE PROTECTION

(30) Priorität: 23.03.2005 EP 05006400
(43) Veröffentlichungstag der Anmeldung: 05.12.2007
(73) Patentinhaber: SIEMENS AKTIENGESELLSCHAFT, 80333 München (DE)
(72) Erfinder: BEUTIN, Matthias, 46446 Emmerich (DE); BRAUN, Gilbert, 52134 Herzogenrath (DE); EISENLOHR, Holger, 13591 Berlin (DE); GAIO, Giuseppe, 53173 Bonn (DE); GÜNTHER, Frank, 47249 Duisburg (DE); ROGOS, Kai-Uwe, 45473 Mülheim An Der Ruhr (DE); VONNEMANN, Bernd, 45968 Gladbeck (DE); ZASTROZNY, Edmund, 45359 Essen (DE)
(86) Internationale Anmeldenummer: PCT/EP2006/050222
(87) Internationale Veröffentlichungsnummer: WO 2006/100132

(56) Entgegenhaltungen:
- DE-A1- 4 431 291
- DE-A1- 19 542 464
- GB-A- 2 293 923
- US-A- 3 278 341
- US-A- 4 175 438
- US-A- 4 747 700
- US-A- 5 348 395
- US-B1- 6 325 535

## Beschreibung

Die Erfindung betrifft eine Gasturbine mit einem Strömungspfad für ein Heißgas, der von einer Kanalwand umschlossen ist, mit zumindest einem in der Kanalwand angeordneten Messfühler zur Bestimmung eines Parameters des Heißgases, welcher Messfühler eine temperaturbeständige und mit dem Heißgas in Verbindung stehende Messspitze und eine außerhalb des Strömungspfads angeordnete in einer Schutzhülle verlegte Messleitung aufweist. Ferner betrifft die Erfindung eine solche Schutzhülle und ein Verfahren zum Schützen einer in einer Schutzhülle verlegten Messleitung.

Aus der GB 2 293 923 A ist eine Gasturbine mit einer Messanordnung zur Erfassung der Temperatur eines in einem im Querschnitt kreisförmigen Kanal strömenden Gases bekannt. Hierzu sind mehrere über den Umfang des Kanals verteilte Thermoelemente in der Kanalwand montiert. Um deren elektrische Messleitungen vor den außerhalb des Kanals herrschenden Temperaturen zu schützen, sind diese in einer hermetisch dichten Schutzumgebung verlegt, welches aus einem System aus miteinander verbundenen Rohren und Abzweigdosen aus nicht rostendem Stahl oder Aluminium gebildet ist.

An den Anschluss- bzw. Verbindungspunkten der Rohre mit den Abzweigdosen können jedoch aufgrund von Wärmedehnungen Undichtigkeiten auftreten, durch die heiße Umgebungsluft in die Schutzumgebung eindringen und die Isolierung der Messleitungen unzulässig hohen Temperaturen aussetzen kann. Dies kann zu fehlerhaften Messergebnissen, zu Defekten an der Isolierung der Messleitungen oder sogar bis hin zum Totalausfall eines Messfühlers führen.

Ein weiterer Nachteil sind die aufwändige Konstruktion von rohrähnlichen Schutzhüllen und deren dichte Anschlüsse an den Abzweigdosen, um eine hermetische Schutzumgebung zu bilden.

Des Weiteren ist aus der US 5,348,395 ein gekühltes Pyrometer zur Temperaturmessung eines Verbrennungsheißgases bekannt. Das Pyrometer umfasst ein doppelt ummanteltes Thermoelement, welches im Zwischenraum mit Wasser kühlbar ist. Ein weiterer gekühlter Messfühler ist beispielsweise aus der US 6,325,535 bekannt.

Aufgabe der vorliegenden Erfindung ist es daher, eine Gasturbine der Eingangs genannten Art mit einer strukturell einfachen Schutzhülle für Messleitungen von Messfühlern zu schaffen, in der die Messleitungen kostengünstig verlegt und sicher vor unzulässig hohen Betriebstemperaturen geschützt sind. Eine weitere Aufgabe der Erfindung ist es, eine dementsprechende Schutzhülle und ein Verfahren zum Schützen einer in einer Schutzhülle verlegten Messleitung anzugeben.

Zur Lösung der Aufgabe wird eine gattungsgemäße Gasturbine vorgeschlagen, bei der zum Einleiten eines Kühlmittels in die Schutzhülle diese mit einer das Kühlmittel entnehmbaren Kühlmittelquelle strömungstechnisch verbunden ist.

Mit der Erfindung wird vorgeschlagen, eine Gasturbine der Eingangs genannten Art mit einem von einem Kühlmedium durchspülten Kanalsystem für die Messleitungen von Messeinrichtungen bzw. Messfühlern der Gasturbine auszustatten, welches zum Schutz der Messleitungen vor unzulässig hohen Temperaturen, die oberhalb der Betriebstemperaturen der Isolierung der elektrischen Messleitungen liegen, einsetzbar ist. Beim Betrieb der Gasturbine wird zum thermischen Schutz der Messleitungen in die vor mechanischen Einflüssen schützende Schutzhülle ein Kühlmittel eingeleitet, welches .eine mit der Schutzhülle strömungstechnisch verbundenen Kühlmittelquelle entnommen wird. Durch die Erfindung werden die thermischen und mechanischen Anforderungen bezüglich des Schutzes der Messleitungen getrennt voneinander gelöst und nicht wie bisher, durch eine gemeinsame Vorrichtung. Die Kanalwand ist quer zu ihrer Längserstreckung ringförmig ausgebildet und weist eine dem Heißgas abgewandte Umfangsfläche auf, an der die Schutzhülle den Strömungspfad zumindest teilweise ringförmig umgreift. Dies ermöglicht eine einfache und kostengünstige Anordnung der Schutzumgebung.

Außerdem kann das die Schutzhülle durchströmende Kühlmittel die von außerhalb der Schutzhülle darauf einwirkende Wärmeenergie, die eine Beschädigung der Messleitungen bzw. deren Isolierung hervorrufen kann, einfach, kostengünstig und zuverlässig abtransportiert werden. So kann das Temperaturniveau innerhalb der Schutzhülle auf einen Temperaturwert gehalten werden, der für die Messleitungen und deren Isolierung unschädlich, d.h. zulässig ist.

Im Falle einer Undichtigkeit in der Schutzhülle, unabhängig davon, ob diese an einem kritischen Anschluss- bzw. Verbindungspunkt der Schutzhülle oder sogar dazwischen auftritt, kann das Eindringen von heißer Umgebungsluft verhindert und ein sicherer Betrieb der Gasturbine erreicht werden, da durch die undichte Stelle das in der Schutzhülle strömende Kühlmittel als Sperrmedium ausströmen kann. Selbstverständlich ist der Druck im Kühlmittel größer als der Druck der Umgebungsluft.

Zudem schützt das durch die Schutzhülle strömende Kühlmittel die elektrischen Messleitungen und kühlt die Schutzhülle. Der Einsatz von preiswerteren Materialien zur Bildung der Schutzhülle wird dadurch ermöglicht. Außerdem kann die aus dem Stand der Technik aufwändige Konstruktion der Schutzhülle aus Rohren und Abzweigdosen und deren Verbindungen wesentlich vereinfacht werden, was zu Kosteneinsparung führt.

Darüber hinaus sind in der Kanalwand im Bereich der Schutzhülle mehrere Messfühler vorgesehen, deren Messleitungen innerhalb einer einzigen Schutzhülle verlaufen. Somit ist es nicht erforderlich, dass jede Messleitung in einer eigenen Schutzhülle verlegt ist.

Zudem weist die Schutzhülle für Messfühler zumindest eine Durchführung auf. Damit können die Messleitung oder die Messspitze des Messfühlers von außen in die Schutzhülle eingeführt werden. Ferner wird damit erreicht, dass der Messfühler an einer beliebigen Stelle zwischen der Kanalwand und der Schutzhülle angeordnet sein kann, ohne, wie beim Stand der Technik, eine eigens dafür ausgebildete, separate Rohrleitung verwenden zu müssen. Die bekannten Abzweigdosen können entfallen.

Vorteilhafte Ausgestaltungen sind in den Unteransprüchen angegeben.

Zweckmäßigerweise ist der Messfühler in der Durchführung dicht befestigt. Ein Eindringen von heißer Umgebungsluft in die Schutzhülle wird somit wirkungsvoll verhindert, so dass die Isolierungen der Messleitungen maximal den bestimmungsgemäßen Betriebstemperaturen ausgesetzt sind. Zudem kann Kühlluft eingespart werden, weil diese nicht entweichen kann.

Die Befestigung des Messfühlers in der Durchführung für Kühlmittel kann aber auch durchlässig sein, so dass Kühlmittel an dieser Stelle ausströmen kann. Die Herstellungskosten für eine solche Befestigung sind vergleichsweise gering, da für eine kühlmitteldurchlässige Durchführung weniger Bauteile benötigt werden als für eine dichte Ausgestaltung. Zudem können diese mit größeren Toleranzen gefertigt werden als bei einer hermetisch dichten Schutzhülle. Somit sind die Herstellungskosten als auch Montagekosten für eine solche Ausgestaltung geringer. Daneben kann, falls erforderlich, zusätzlich der Messfühler mitgekühlt werden, um den Einsatzbereich des Messfühlers zu erweitern.

Eine besonders bevorzugte Weiterbildung sieht vor, dass die Messleitungen durch Distanzelemente von der Innenwand der Schutzhülle beabstandet sind. Damit wird verhindert, dass die Messleitungen an der Schutzhülle anliegen. Ferner werden dadurch die Messleitungen rundum von Kühlmedium umströmt, so dass ein besonders sicherer Betrieb der Messeinrichtung und damit auch der Gasturbine ermöglicht ist. Die Distanzelemente sind aus einem Material gefertigt, welches Wärme schlecht leitet.

Besonders sinnvoll erfolgen die Einspeisung des Kühlmittels an der niedrigsten Stelle der Schutzhülle und die Abfuhr des Kühlmittels an der höchsten Stelle der Schutzhülle. Dies führt zu einer besonders wirkungsvollen Kühlung der Schutzhülle. Gleichzeitig dient der Zuführkanal des Kühlmittels als Führungselement für die Messleitungen zu einer Mess-, Regel- oder Auswerteeinrichtung der Gasturbine.

Der Strömungspfad kann innerhalb einer Brennkammer, innerhalb einer Turbineneinheit oder innerhalb eines Abgas-Diffusors bzw. Abgasgehäuses einer stationären Gasturbine ausgebildet sein. Besonders vorteilhaft ist die Erfindung einsetzbar, wenn die Messfühler Thermoelemente, insbesondere Abgasthermoelemente sind. Als kostengünstige und einfach zu montierende Schutzhülle kann diese ein metallischer, flexibler Schlauch sein. Im Vergleich zum Stand der Technik, bei der die Messleitungen durch gebogene Rohre geführt sind, kann aufgrund des flexiblen Schlauches als Schutzhülle das Biegen der Stahlrohre entfallen.

Die Erfindung wird anhand einer Zeichnung beschrieben. Es zeigt:
- Fig. 1: eine stationäre Gasturbine in einem Längsteilschnitt,
- Fig. 2: einen Querschnitt durch ein Abgasgehäuse einer Gasturbine mit einer Messanordnung,
- Fig. 3: eine Abwicklung einer Schutzhülle für eine Messanordnung und
- Fig. 4: ein Distanzelement.

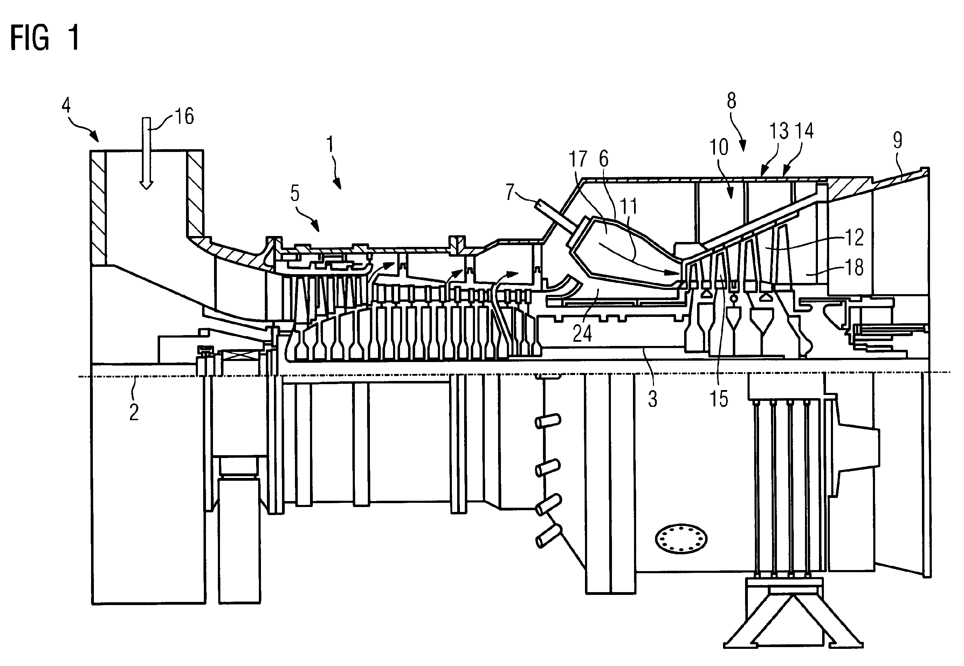

Die Fig. 1 zeigt eine Gasturbine 1 in einem Längsteilschnitt. Sie weist im Inneren einen um eine Rotationsachse 2 drehgelagerten Rotor 3 auf, der auch als Turbinenläufer bezeichnet wird. Entlang des Rotors 3 folgen aufeinander ein Ansauggehäuse 4, ein Verdichter 5, eine torusartige Ringbrennkammer 6 mit mehreren koaxial angeordneten Brennern 7, eine Turbineneinheit 8 und das Abgasgehäuse 9. Die Ringbrennkammer 6 bildet dabei einen Verbrennungsraum 17, der mit einem ringförmigen Heißgaskanal 18 kommuniziert. Dort bilden vier hintereinander geschaltete Turbinenstufen 10 die Turbineneinheit 8. Jede Turbinenstufe 10 ist aus zwei Schaufelringen gebildet. In Strömungsrichtung eines Heißgases 11 gesehen, folgt im Heißgaskanal 18 einer Leitschaufelreihe 13 eine aus Laufschaufeln 15 gebildete Reihe 14. Die Leitschaufeln 12 sind dabei am Stator befestigt, wohingegen die Laufschaufeln 15 einer Reihe 14 mittels einer Turbinenscheibe am Rotor 3 angebracht sind. Am Rotor 3 ist ein Generator oder eine Arbeitsmaschine angekoppelt (nicht dargestellt).

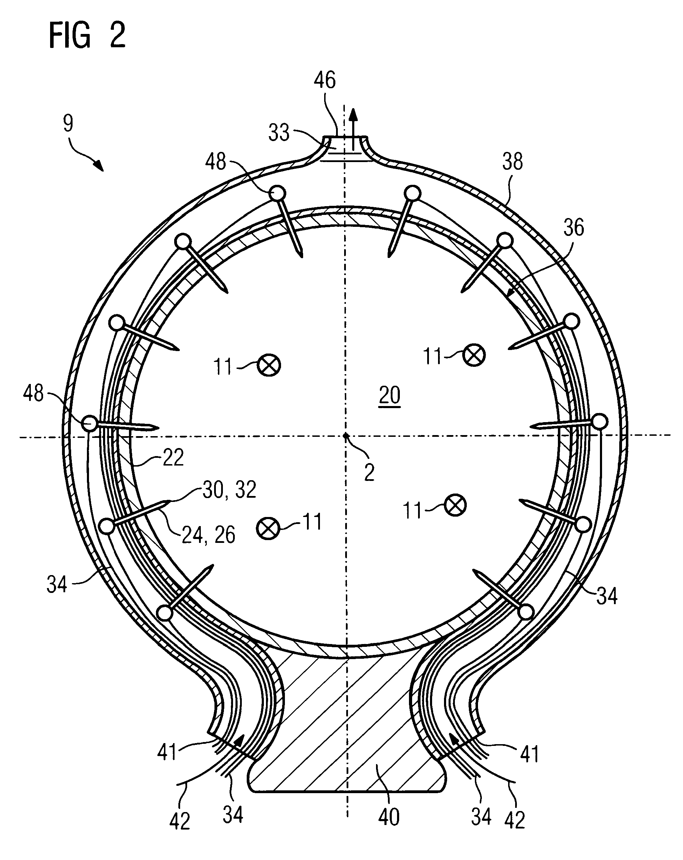

Die Fig. 2 zeigt das Abgasgehäuse 9 der Gasturbine 1 im Querschnitt. Der Strömungspfad 20 für das heiße Abgas wird von einer kreisförmigen Kanalwand 22 umschlossen, durch den das in der Turbineneinheit 8 entspannte Heißgas 11 als Abgas abgeführt wird. Im Abgasgehäuse 9 sind mehrere, beispielsweise zwölf Thermoelemente 24 als Messfühler 26 angeordnet, die über den Umfang der Kanalwand 22 verteilt auf einem zur Rotationsachse 2 konzentrischen Kreis liegen. Jeder der Messfühler 26 umfasst eine, bezogen auf die Temperatur des Heißgases 11, temperaturbeständige Messspitze 30, an deren Ende 32 ein Parameter des Heißgases 11, beispielsweise dessen Temperatur, erfasst werden kann. Ferner umfassen die Messfühler 26 elektrische Messleitungen 34, deren Isolation bezogen auf eine an der Außenseite 36 der Kanalwand 22 herrschende Außentemperatur, temperaturunbeständig ist. Um die Isolierungen der Messleitungen 34 vor Beschädigungen und Defekte aufgrund der von dem Heißgas 11 bzw. Abgas aufgeheizten Außentemperatur zu schützen, verlaufen diese in einer Schutzhülle 38. Analog zu der auf einem Kreis liegenden Messfühler 26 verläuft die Schutzhülle 38 zumindest abschnittsweise ringförmig um den Strömungspfad 20 der Gasturbine 1. Innerhalb der Schutzhülle 38 können die Messleitungen 34 mehrerer Messfühler 26 verlaufen.

Die schlauchförmige Schutzhülle 38 ist beispielsweise beidseitig eines Sockels 40 der Gasturbine 1 mit einer Kühlmittelquelle verbunden. Die Kühlmittelquelle kann beispielsweise der Verdichter 5 oder eine externe Quelle sein. Dem jeweiligen Ende 41 der Schutzhülle 38 wird beim Betrieb der Gasturbine 1 ein von der Kühlmittelquelle bereitgestelltes Kühlmittel 42, vorzugsweise vom Verdichter 5 verdichtete Kühlluft, zugeführt. Das Kühlmittel 42 wird zur Kühlung der Schutzhülle 38 und zum thermischen Schutz der darin verlaufenden Messleitungen 34 in die Schutzhülle 38 eingeblasen und kann anschließend am annähernd höchstgelegenen Punkt 33 der Schutzhülle 38 durch eine geeignete Austrittsöffnung 46 abgeleitet oder auch in die Umgebungsluft ausgeblasen werden.

Für jeden Messfühler 26 weist die Schutzhülle 38 eine Durchführung 48 auf, aus der die jeweilige Messspitze 30 derart weit herausragt, dass sie mit dem Heißgas 11 in Verbindung steht. Dabei sind die Durchführung 48 und die Messspitze 30 beispielsweise dicht miteinander verschraubt, um Kühlmittel einzusparen.

Alternativ zu einer dichten Verschraubung kann die Durchführung 48 und die Messspitze 30 auch so miteinander verbunden sein, dass Kühlmittel 42 in vorbestimmter, d.h. begrenzter Menge an dieser Stelle ausströmen kann, um gegebenenfalls die um die Messspitze 30 herrschenden Temperaturen weiter zu reduzieren. Dies führt zu einer Erweiterung des Einsatzbereichs des Messfühlers 26. Wenn der Messfühler 26 als Thermoelement 24 ausgebildet ist, sind für diesen Fall die aufgenommenen Messwerte dementsprechend zu korrigieren.

Anstelle eines Abgasstromes kann auch ein Heißgasstromes in einer Brennkammer, insbesondere einer Rohrbrennkammer überwacht werden, wenn die Messfühler 26 mit einer derartigen Schutzhülle 38 ausgestaltet sind, durch die Kühlluft oder ein anderes geeignetes Kühlmittel 42 strömen kann.

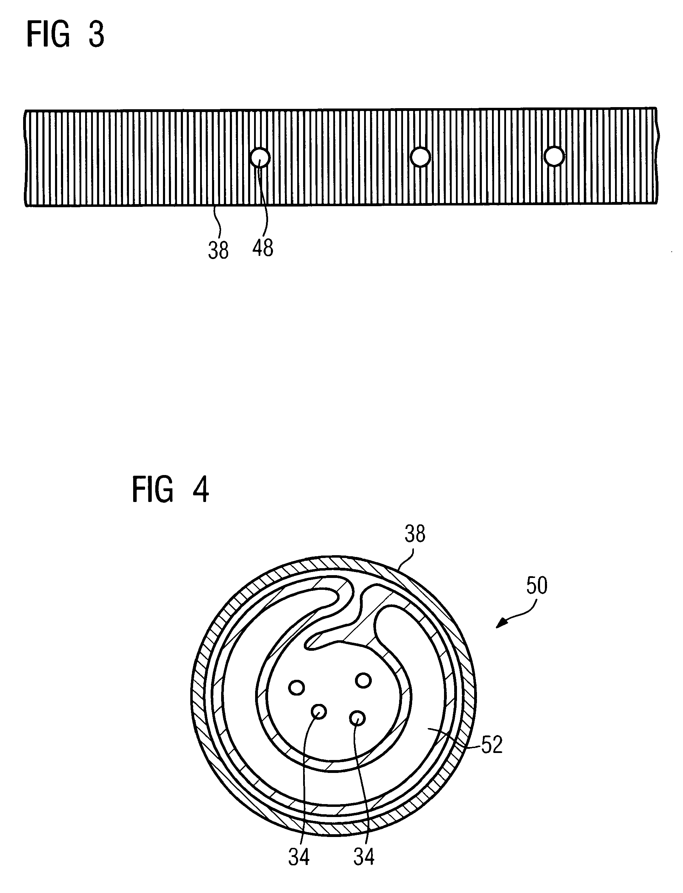

In Fig. 3 ist beispielsweise die abgewickelte Schutzhülle 38 der Gasturbine 1 gezeigt. Diese kann ein kostengünstiger Aluminium-Wellrohrschlauch sein. Die Durchführungen für die Messfühler 26 können sowohl seitlich an der Schutzhülle 38 (Fig. 2) als auch in den Bereichen der Schutzhülle 38 angeordnet sein, welche an der Außenseite 36 oder auch Umfangsfläche der Kanalwand 22 anliegen (Fig. 3).

Bei der Montage der Messfühler 26 in der Gasturbine 1 und der Messleitungen 34 können in der Schutzhülle 38 zudem klammerartige Distanzelemente 50 (Fig. 4) eingesetzt werden, die die Messleitungen 34 zur Wand der Schutzhülle 38 auf Abstand halten, d.h. die Distanzelemente 50 zentrieren die Messleitungen in der Schutzhülle 38, ohne das Spülen der Schutzhülle 38 mit Kühlmittel 42 einzuschränken, da sie Ausnehmung 52 aufweisen, durch die das Kühlmittel 42 strömen kann. Solche, vorzugsweise Wärme schlecht leitenden Distanzelemente 50 können an den Messleitungen 34, beispielsweise ungefähr alle 10 bis 15 cm, angebracht sein.

## Patentansprüche

1. Gasturbine (1),
mit einem Strömungspfad (20) für ein Heißgas (11), der von einer quer zu ihrer Längserstreckung ringförmig ausgebildeten Kanalwand (22) umschlossen ist,
mit zumindest einem in der Kanalwand (22) angeordneten Messfühler (26) zur Bestimmung eines Parameters des Heißgases (11), welcher Messfühler (26) eine temperaturbeständige und mit dem Heißgas (11) in Verbindung stehende Messspitze (30) und eine außerhalb des Strömungspfads (26) angeordnete, in einer Schutzhülle (38) verlegte Messleitung (34) aufweist,
wobei die Kanalwand (22) eine dem Heißgas (11) abgewandte Umfangsfläche aufweist, an der die Schutzhülle (38) den Strömungspfad (20) zumindest teilweise umgreift und bei der zum Einleiten eines Kühlmittels (42) in die Schutzhülle (38) diese mit einer das Kühlmittel (42) entnehmbaren Kühlmittelquelle strömungstechnisch verbunden ist, **dadurch gekennzeichnet, dass**
in der Kanalwand (22) im Bereich der Schutzhülle (38) mehrere Messfühler (26) vorgesehen sind, deren Messleitungen (34) innerhalb der einzigen Schutzhülle (38) verlaufen, und dass
die Schutzhülle (38) zumindest eine Durchführung (48) für Messfühler (26) aufweist, in der jeweils einer der Messfühler (26) befestigt ist.

2. Gasturbine (1) nach Anspruch 1,
bei der der Messfühler (26) in der Durchführung (48) dicht befestigt ist.

3. Gasturbine (1) nach Anspruch 1,
bei der die Befestigung des Messfühlers (26) in der Durchführung (48) für Kühlmittel (42) durchlässig ist.

4. Gasturbine (1) nach einem oder mehreren der vorhergehenden Ansprüche,
bei der die Messleitungen (34) durch Distanzelemente (50) von der Innenwand der Schutzhülle (38) beabstandet sind.

5. Gasturbine (1) nach einem oder mehreren der vorhergehenden Ansprüche,
bei der die Einspeisung des Kühlmittels (42) in die Schutzhülle (38) an der niedrigsten Stelle der Schutzhülle (38) und der Auslass des Kühlmittels (42) an der höchsten Stelle der Schutzhülle (38) vorgesehen sind.

6. Gasturbine (1) nach einem oder mehreren der vorhergehenden Ansprüche,
bei der der Strömungspfad (20) innerhalb einer Brennkammer (6), innerhalb einer Turbineneinheit (8) oder innerhalb eines Abgas-Diffusors einer stationären Gasturbine (1) ausgebildet ist.

7. Gasturbine (1) nach einem oder mehreren der vorhergehenden Ansprüche,
bei der die Messfühler (26) Thermoelemente (24), insbesondere Abgas-Thermoelemente sind.

8. Gasturbine (1) nach einem oder mehreren der vorhergehenden Ansprüche,
bei der die Schutzhülle (31) ein metallischer, flexibler Schlauch ist.

9. Gasturbine (1) nach einem oder mehreren der vorhergehenden Ansprüche,
bei der als Kühlmittel (42) Kühlluft einsetzbar ist.

## Claims

1. Gas turbine (1),
with a flow path (20) for a hot gas (11), which is enclosed by a passage wall (22) which is formed in an annular shape transversely to its longitudinal extent,
with at least one probe (26) which is arranged in the passage wall (22) for determining a parameter of the hot gas (11), which probe (26) has a measuring tip (30) which is temperature-resistant and in communication with the hot gas (11), and an instrument lead (34) which is arranged outside the flow path (26) and laid in a protective sheath (38),
wherein the passage wall (22) has a circumferential surface which faces away from the hot gas (11) and upon which the protective sheath (38) at least partially encompasses the flow path (20), and in which for introducing a cooling medium (42) into the protective sheath (38) this is fluidically connected to a cooling medium source from which the cooling medium (42) is extractable,
**characterized in that,**
a plurality of probes (26) are provided in the passage wall (22) in the region of the protective sheath (38), the instrument leads (34) of which extend inside the single protective sheath (38), and
the protective sheath (38) has at least one leadthrough (48) for probes (26), in which one of the probes (26) is fastened in each case.

2. Gas turbine (1) according to Claim 1,
in which the probe (26) is fastened in the leadthrough (48) in a sealed manner.

3. Gas turbine (1) according to Claim 1,
in which the fastening of the probe (26) in the leadthrough (48) is permeable for cooling medium (42).

4. Gas turbine (1) according to one or more of the preceding claims,
in which the instrument leads (34) are spaced away from the inner wall of the protective sheath (38) by means of distance elements (50).

5. Gas turbine (1) according to one or more of the preceding claims,
in which the feed of cooling medium (42) into the protective sheath (38) is provided at the lowest point of the protective sheath (38) and the outlet of cooling medium (42) is provided at the highest point of the protective sheath (38).

6. Gas turbine (1) according to one or more of the preceding claims,
in which the flow path (20) is formed inside a combustion chamber (6), inside a turbine unit (8), or inside an exhaust gas diffuser of a stationary gas turbine (1).

7. Gas turbine (1) according to one or more of the preceding claims,
in which the probes (26) are thermoelements (24), especially exhaust gas thermoelements.

8. Gas turbine (1) according to one or more of the preceding claims,
in which the protective sheath (31) is a metal, flexible sleeve.

9. Gas turbine (1) according to one or more of the preceding claims,
in which cooling air is usable as cooling medium (42).

## Revendications

1. Turbine ( 1 ) à gaz,
comprenant un trajet ( 20 ) d'écoulement d'un gaz ( 11 ) chaud , qui est entouré d'une paroi ( 22 ) de canal formée annulairement transversalement à son étendue longitudinale,
comprenant au moins une sonde ( 26 ) de mesure montée dans la paroi ( 22 ) du canal pour déterminer un paramètre du gaz ( 11 ) chaud, sonde ( 26 ) de mesure qui a une pointe ( 30 ) de mesure résistant à la température et en liaison avec le gaz ( 11 ) chaud et une ligne ( 34 ) de mesure disposée à l'extérieur du trajet ( 26 ) d'écoulement et mise dans une gaine ( 38 ) de protection,
la paroi ( 22 ) du canal ayant une surface de pourtour éloignée du gaz ( 11 ) chaud sur laquelle la gaine ( 38 ) de protection entoure au moins en partie le trajet ( 20 ) d'écoulement et dans laquelle, pour introduire un fluide ( 42 ) de refroidissement dans la gaine ( 38 ) de protection, celle-ci communique du point de vue de la technique d'écoulement avec une source de fluide de refroidissement dont du fluide ( 42 ) de refroidissement peut être prélevé, **caractérisée en ce que,**
dans la paroi ( 22 ) du canal, sont prévues dans la partie de la gaine ( 38 ) de protection plusieurs sondes ( 26 ) de mesure, dont les lignes ( 34 ) de mesure s'étendent à l'intérieur de la gaine ( 38 ) de protection qui est unique et **en ce que**
la gaine ( 38 ) de protection a au moins une traversée ( 48 ) pour des sondes ( 26 ) de mesure, dans laquelle est fixée, respectivement, l'une des sondes ( 26 ) de mesure.

2. Turbine ( 1 ) à gaz suivant la revendication 1,
dans laquelle la sonde ( 26 ) de mesure est fixée de manière étanche dans la traversée ( 48 ).

3. Turbine ( 1 ) à gaz suivant la revendication 1,
dans laquelle la fixation de la sonde ( 26 ) de mesure dans la traversée ( 48 ) est perméable à du fluide ( 42 ) de refroidissement.

4. Turbine ( 1 ) à gaz suivant l'une ou plusieurs des revendications précédentes,
dans laquelle les lignes ( 34 ) de mesure sont maintenues à distance de la paroi intérieure de la gaine ( 38 ) de protection par des éléments ( 50 ) d'entretoisement.

5. Turbine ( 1 ) à gaz suivant l'une ou plusieurs des revendications précédentes,
dans laquelle l'alimentation du fluide ( 42 ) de refroidissement dans la gaine ( 38 ) de protection a lieu au point le plus bas de la gaine ( 38 ) de protection et la sortie du fluide ( 42 ) de refroidissement au point le plus haut de la gaine ( 38 ) de protection.

6. Turbine ( 1 ) à gaz suivant l'une ou plusieurs des revendications précédentes,
dans laquelle le trajet ( 20 ) d'écoulement est formé à l'intérieur d'une chambre de combustion ( 6 ) à l'intérieur d'un groupe ( 8 ) de turbine ou à l'intérieur d'un diffuseur de gaz d'échappement d'une turbine ( 1 ) à gaz fixe.

7. Turbine ( 1 ) à gaz suivant l'une ou plusieurs des revendications précédentes,
dans laquelle les sondes ( 26 ) de mesure sont des thermocouples ( 24 ), notamment des thermocouples de gaz d'échappement.

8. Turbine ( 1 ) à gaz suivant l'une ou plusieurs des revendications précédentes,
dans laquelle la gaine ( 31 ) de protection est un conduit souple métallique.

9. Turbine ( 1 ) à gaz suivant l'une ou plusieurs des revendications précédentes,
dans laquelle on peut utiliser de l'air de refroidissement comme fluide de refroidissement.
